# EUROPÄISCHE PATENTSCHRIFT

(11) **EP 4 488 585 B1**
(45) Veröffentlichungstag und Bekanntmachung des Hinweises auf die Patenterteilung: **24.09.2025**
(21) Anmeldenummer: 24185398.5
(22) Anmeldetag: 28.06.2024
(51) Int. Cl.: F24C 15/32, F24C 7/08

(54) **VERFAHREN ZUR BESTIMMUNG DES STATUS EINES GARGERÄTS SOWIE GARGERÄT**
METHOD FOR DETERMINING THE STATUS OF A COOKING DEVICE AND COOKING DEVICE
PROCÉDÉ DE DÉTERMINATION DE L'ÉTAT D'UN APPAREIL DE CUISSON ET APPAREIL DE CUISSON

(30) Priorität: 03.07.2023 DE 102023117525
(43) Veröffentlichungstag der Anmeldung: 08.01.2025
(73) Patentinhaber: Rational Aktiengesellschaft, 86899 Landsberg am Lech (DE)
(72) Erfinder: HEIM, Martin, 86899 Landsberg am Lech (DE); SCHREINER, Thomas, 86899 Landsberg am Lech (DE)
(74) Vertreter: Prinz & Partner mbB

(56) Entgegenhaltungen:
- WO-A2-2015/055606

## Beschreibung

Die Erfindung betrifft ein Verfahren zur Bestimmung des Status, insbesondere der Dichtigkeit, eines Gargeräts mit einer Dampfheizung. Des Weiteren betrifft die Erfindung ein Gargerät mit einer Dampfheizung und einem Steuergerät, das dazu eingerichtet ist, ein derartiges Verfahren Ansprüche durchzuführen.

Gargeräte mit einer Dampfheizung sind bekannt und dazu eingerichtet, bei einer Betriebsart mit aktivierter Dampfheizung Gargut im Garraum zu dämpfen.

Dämpfen ist ein allgemein bekanntes Verfahren, mit dem Lebensmittel gegart werden können, indem sie Wasserdampf ausgesetzt werden, der durch Erhitzen einer Flüssigkeit, meist Wasser, erzeugt wird. Die Lebensmittel werden dabei so gegart, dass sie nicht direkt mit der Flüssigkeit in Kontakt kommen. Auf diese Weise wird ein schonender Garverlauf erreicht, ohne dass das Gargut auslaugt. Ein weiterer Vorteil besteht darin, dass bei bereits abgeschmeckten Lebensmitteln die Gewürze nicht abgewaschen werden.

Der Energiebedarf eines Gargeräts im Neuzustand in einer Betriebsart mit aktivierter Dampfheizung sind bekannt. Mit zunehmendem Alter des Gargeräts kann aufgrund von Verschleiß einzelner Bauteile oder aufgrund von Alterung der Dichtungen der Energiebedarf ansteigen. Um den Status des Gargeräts bzw. diese Veränderung des Energiebedarfs zu ermitteln, wird das Gargerät in einem speziellen Testbetrieb betrieben.

WO 2015/055606 A2 offenbart ein Verfahren zum Selbsttest und Überprüfen bestimmter Funktionen eines Gargeräts (1), wobei erfasste Temperaturen und Temperaturprofile mit Referenztemperaturwerten bzw. Referenztemperaturprofilen die in der Gerätesteuerung abgespeichert sind, verglichen werden.

Aufgabe der Erfindung ist es, ein Verfahren bereitzustellen, mittels dem mit geringem Aufwand der Status, insbesondere die Dichtigkeit, eines Gargeräts mit einer Dampfheizung bestimmt werden kann. Aufgabe der Erfindung ist es ferner, ein Gargerät bereitzustellen, dessen Status mittels eines solchen Verfahrens bestimmt werden kann.

Die Aufgabe wird gelöst durch ein Verfahren zur Bestimmung des Status, insbesondere der Dichtigkeit, eines Gargeräts mit einer Dampfheizung, mit den Schritten:
a) Bestimmen eines Ist-Energiebedarfsniveaus der Dampfheizung, bei dem der Energiebedarf der Dampfheizung während des Betriebs konstant ist,
b) Ermitteln einer Abweichung des Ist-Energiebedarfsniveaus von einem Soll-Energiebedarfsniveau und/oder einer Abweichung des Verlaufs mehrerer Ist-Energiebedarfsniveaus von einem bestimmten Verlauf mehrerer Soll-Energiebedarfsniveaus, und
c) anhand der ermittelten Abweichung die Verluste des Gargeräts und somit dessen Status, insbesondere dessen Dichtigkeit bestimmt werden.

Im Sinne der Erfindung bedeutet konstant, dass die Änderung des Energiebedarfs der Dampfheizung während eines Betriebszeitraums unterhalb eines definierten Schwellenwerts liegt.

Im Leerbetrieb des Gargeräts, d.h. ohne Gargut im Garraum, wird in einer Betriebsart mit aktivierter Dampfheizung innerhalb weniger Minuten der Garraum mit Dampf gefüllt. Anschließend dauert es ca. 30 Minuten, bis das Gargerät durchgeheizt ist. Ab diesem Zeitpunkt ist der Energiebedarf des Gargeräts, der den Verlusten entspricht, konstant.

Befindet sich ein Gargut im Garraum, so muss dieses zusätzlich erwärmt werden. Ab dem Zeitpunkt, bei dem das Gargut die Garraumtemperatur angenommen hat, stoppt der Energiefluss ins Gargut. Wenn das Gargerät auch schon durchgeheizt ist, entspricht der Energiebedarf des Gargeräts dessen Leerbetriebsenergiebedarf.

Es wurde erfindungsgemäß erkannt, dass es ausreicht, bei einem Gargerät im Betrieb einen Betriebszustand zu finden, bei dem sich der Energiebedarf nicht mehr ändert, d.h. ein Ist-Energiebedarfsniveau. Der Beladungszustand muss nicht berücksichtigt werden.

Ferner wurde erfindungsgemäß erkannt, dass der Energiebedarf auf die Aktivität der Dampfheizung und somit deren Energiebedarf reduziert werden kann. Die Aktivität der Dampfheizung ist durch die Zustände An und Aus bekannt und lässt sich somit mit geringem Aufwand erfassen.

Folglich können anhand der Abweichung des Ist-Energiebedarfsniveaus der Dampfheizung von einem definierten Vergleichswert in Form eines Soll-Energiebedarfsniveaus die Verluste des Gargeräts und somit dessen Status bzw. Zustand bestimmt werden, insbesondere dessen Dichtigkeit. Denn erhöht sich der Energiebedarf und damit das Ist-Energiebedarfsniveau, ist dies ein Indiz für eine erhöhte Leckage des Gargeräts.

In einer Ausführungsform wird das Ist-Energiebedarfsniveau ausschließlich anhand des Verlaufs des Energiebedarfs der Dampfheizung während des Betriebs bestimmt, wodurch das Verfahren besonders effizient ist.

Zusätzlich oder alternativ kann vorgesehen sein, dass das Bestimmen des Ist-Energiebedarfsniveaus während eines Garbetriebs durchgeführt wird, d.h. mit Gargut. Somit kann der Status des Gargeräts im alltäglichen Betrieb beim Kunden ermittelt werden, ohne das hierzu ein Leerbetrieb oder ein spezieller Testbetrieb erforderlich wäre.

In einer weiteren Ausführungsform wird das Ist-Energiebedarfsniveau anhand mehrerer Intervalle während des Betriebs bestimmt. Hierdurch kann mit einfachen mathematischen Mitteln zuverlässig ein Wert für das Ist-Energiebedarfsniveau ermittelt werden.

Ferner kann vorgesehen sein, dass das Soll-Energiebedarfsniveau und/oder der bestimmte Verlauf mehrerer Soll-Energiebedarfsniveaus vom Alter des Gargeräts, von der Gesamtbetriebsdauer des Gargeräts und/oder von der Gesamtbetriebsdauer der Dampfheizung abhängt. Auf diese Weise kann das Gargerät über die Soll-Energiebedarfsniveaus mit einer Grundgesamtheit an Gargeräten verglichen werden, die ein vergleichbares Alter und/oder eine vergleichbare Gesamtbetriebsdauer aufweisen. Signifikante Abweichungen können auf eine Beschädigung beispielsweise einer Dichtung hindeuten.

Alternativ kann das Soll-Energiebedarfsniveau einem ursprünglichen Energiebedarfsniveau entsprechen, der dem Neuzustand des Gargeräts zugeordnet ist. Ein solcher Vergleich gibt Auskunft darüber, wie stark die Effizienz des Gargeräts gegenüber seinem Neuzustand abgenommen hat.

Erfindungsgemäß ist zur Lösung der oben genannten Aufgabe auch ein Gargerät mit einer Dampfheizung und einem Steuergerät vorgesehen, das dazu eingerichtet ist, ein erfindungsgemäßes Verfahren mit den zuvor genannten Vorteilen durchzuführen.

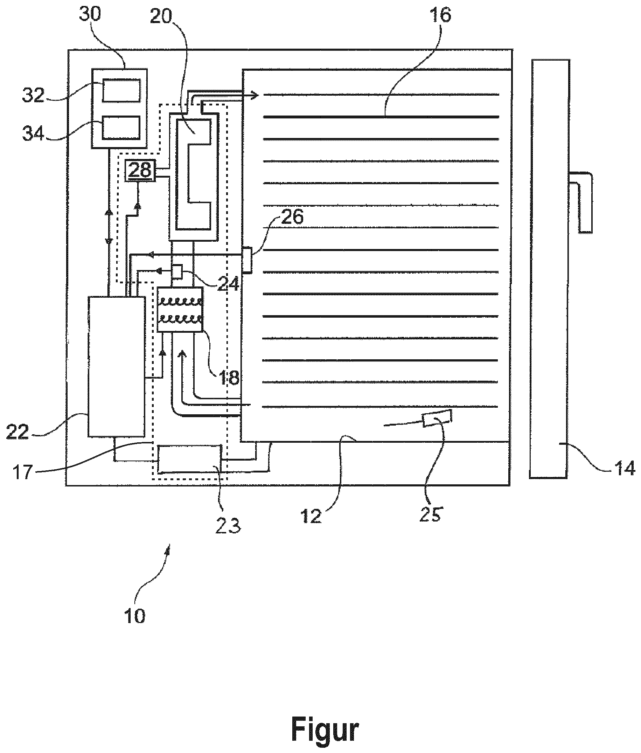

Weitere Vorteile und Merkmale ergeben sich aus der nachfolgenden Beschreibung sowie aus der beigefügten Zeichnung.

Die einzige Figur zeigt in einer schematischen Darstellung ein erfindungsgemäßes Gargerät mit einem Steuergerät zum Durchführen eines erfindungsgemäßen Verfahrens.

In der Figur ist ein Gargerät 10 gezeigt, welches für den Profi-Einsatz in der Großgastronomie, in Restaurants, Kantinen etc. vorgesehen ist.

Das Gargerät 10 besitzt einen Garraum 12, der von außen durch Öffnen einer Tür 14 zugänglich ist, um den Garraum 12 mit Gargut zu beschicken.

Im Garraum 12 ist, hier schematisch angedeutet, Garraumzubehör 16 angeordnet, beispielsweise unterschiedlich viele Backbleche, Grillplatten, Backformen oder Roste, auf denen sich die zu garenden Produkte befinden.

Zur Erzeugung einer gewünschten Garraumatmosphäre ist eine Dampfheizung 17 vorgesehen, die eine Heizvorrichtung 18, eine Zirkulationsvorrichtung 20 in Form eines motorisch angetriebenen Lüfterrads zur Umwälzung der im Garraum 12 vorhandenen, auch als Garmedium bezeichneten Atmosphäre und einen Dampfgenerator 23 hat.

In einer alternativen Ausführungsform ist die Zirkulationsvorrichtung 20 nicht Teil der Dampfheizung 17 und somit separat zur Dampfheizung 17 vorgesehen.

Der Dampfgenerator 23 weist beispielsweise ein mit einem Wasseranschluss gekoppeltes Dampfmodul auf, mit dem der Feuchtegehalt des Garmediums auf einen vorgegebenen Wert gebracht wird. Über den Wasseranschluss ist eine permanente Wasserzufuhr sichergestellt.

Weitere Bauteile, wie ein Ablöschkasten, eine Mikrowellenheizung etc., sind darüber hinaus optional auch vorhanden.

Die Energiezufuhr erfolgt über Gas- und Elektroanschlüsse.

Das Gargerät 10 hat des Weiteren ein Steuergerät 22, das dazu eingerichtet ist, den Energiebedarf der Dampfheizung 17 zu ermitteln.

Das Steuergerät 22 ist ferner signalübertragend mit einem Temperatursensor 24 verbunden, der hier unmittelbar stromabwärts der Heizvorrichtung 18 angeordnet ist, wobei zusätzlich oder alternativ hierzu ein Temperatursensor unmittelbar im Garraum 12 vorhanden sein kann.

Darüber hinaus kann auch ein Kerntemperatursensor 25 vorhanden sein, der in das Gargut eingesteckt werden kann, um dessen Kerntemperatur zu erfassen.

Ferner ist ein Feuchtesensor 26 vorgesehen, der im dargestellten Beispiel im Inneren des Garraums 12 angeordnet ist.

Weitere Sensoren, wie beispielsweise einen Sensor zum Erfassen des Druckes im Garraum, einen Sensor zum Erfassen des geöffneten Zustands oder des geschlossenen Zustands der Tür 14 sowie des Türöffnungswinkels, Sensoren zum Erfassen der Außentemperatur oder des Bräunungsgrads des Garguts oder Sensoren zum Erfassen der Beschickungsmenge sind zur Vereinfachung weggelassen. Solche Sensoren können aber ebenfalls einzeln oder in Kombination vorhanden sein.

Vom Steuergerät 22 werden unter anderem die Heizvorrichtung 18, ein Antriebsmotor 28 der Zirkulationsvorrichtung 20 und der Dampfgenerator 23 angesteuert.

Eine Bedieneinheit 30 mit einer Anzeigeeinrichtung 32 und einer Bedieneinrichtung 34 ermöglicht die Ausgabe von Signalen bzw. die Eingabe von Befehlen. Anzeige- und Bedieneinrichtung 32, 34 können auch durch einen Touchscreen miteinander kombiniert werden. Zusätzlich kann die Bedieneinheit 30 auch akustische Signale abgeben, beispielsweise Hinweis- oder Warntöne.

Im Steuergerät 22 sind zahlreiche Garprogramme, abgestimmt auf das Gargut und individuelle Wünsche des Bedieners, abgelegt. Jedoch können auch unterschiedliche Garraumtemperaturen, Garraumatmosphären oder Betriebsarten vom Bediener zusätzlich eingestellt oder die Garprogramme verändert werden. Darüber hinaus ist es auch möglich, vom Bediener erstellte Garprogramme abzuspeichern.

Im Steuergerät 22 sind für verschiedene Garprogramme ressourcenoptimierte Parameter gespeichert und hinterlegt, wie beispielsweise das ressourcenoptimierte Braten eines Huhns oder eines Schweins, gegebenenfalls auch noch unter Berücksichtigung der verschiedenen gewünschten Bräunungsgrade. Darüber hinaus sind beispielsweise optimierte Beschickungszeiten abhängig von den Beschickungsmengen hinterlegt, die durch Tests bei flinker Beschickung oder entsprechend flinker Entnahme erreichbar sind. Auch optimale Kerntemperaturen und Kerntemperaturverläufe für verschiedenes Gargut sind abgespeichert. Dies ist nur eine Aufzählung einzelner möglicher abgespeicherter Informationen, die noch weiter ergänzt werden kann.

Über das Steuergerät 22 wird, vorzugsweise permanent, der Betriebszustand des Gargeräts und seiner Einzelkomponenten überwacht. Die gewonnenen Daten zu entsprechenden Parametern werden abgespeichert.

Einer dieser Parameter ist der Energiebedarf der Dampfheizung 17.

Des Weiteren ist das Steuergerät 22 dazu eingerichtet, das im Folgenden erläuterte Verfahren durchzuführen, um den Status, insbesondere die Dichtigkeit, des Gargeräts 10 zu bestimmen.

Zunächst wird ein Ist-Energiebedarfsniveaus der Dampfheizung 17 bestimmt, bei dem der Energiebedarf der Dampfheizung 17 während des Betriebs konstant ist.

Das Ist-Energiebedarfsniveau kann hierbei während eines Garbetriebs bestimmt werden.

Zur Bestimmung des Ist-Energiebedarfsniveaus der Dampfheizung 17 wird der Verlauf des Energiebedarfs der Dampfheizung 17 in mehrere Intervalle unterteilt.

In einer Ausführungsform wird hierbei der Verlauf des Energiebedarfs der Dampfheizung 17 auf einen Zeitraum zwischen zwei aufeinanderfolgende Befüllungen des Dampfgenerators 23 eingeschränkt, so dass die Intervalle einem Betriebszustand zugeordnet sind, in dem das Gargerät 10 mit einer Befüllung des Dampfgenerators 23 betrieben wird.

In einer weiteren Ausführungsform wird der Verlauf des Energiebedarfs der Dampfheizung 17 über einen Zeitraum mit mehreren Befüllungen des Dampfgenerators 23 betrachtet. Hierbei kann jedes Intervall dem Zeitraum zwischen zwei aufeinanderfolgenden Befüllungen des Dampfgenerators 23 entsprechen.

Für jedes Intervall wird der Mittelwert des Energiebedarfs der Dampfheizung 17 ermittelt, beispielsweise in Prozent eines maximalen Energiebedarfs der Dampfheizung 17 bzw. deren Leistung über den betrachteten Zeitraum.

Ausgewertet werden mehrere Intervalle, beispielsweise fünf, indem deren Mittelwerte verglichen werden. Liegen die Veränderung der Intervalle zueinander unter einem vorgegebenen Schwellwert, wird das Gargerät, inklusive eventuell im Garraum 12 vorhandenem Gargut, als durchgeheizt betrachtet.

Das Ist-Energiebedarfsniveau der Dampfheizung 17 wird durch einen der ausgewerteten Mittelwerte gebildet, beispielsweise dem Mittelwert des zuletzt erfassten Intervalls.

Alternativ kann der Mittelwert aus den ausgewerteten Mittelwerten gebildet und als Ist-Energiebedarfsniveau der Dampfheizung 17 definiert werden.

In einer alternativen Ausführungsform werden die Mittelwerte der Intervalle exponentiell gefittet. Die Asymptote des exponentiellen Fits bildet hierbei das Ist-Energiebedarfsniveau der Dampfheizung 17.

Grundsätzlich kann das Ist-Energiebedarfsniveau der Dampfheizung 17 durch jedes geeignete mathematische Verfahren anhand des Verlaufs des Energiebedarfs der Dampfheizung 17 ermittelt werden.

Um den Status des Gargeräts 10 zu ermitteln, wird in einem nächsten Schritt das ermittelte Ist-Energiebedarfsniveau mit einem Soll-Energiebedarfsniveau verglichen, das dem typischen Energiebedarfsniveau eine Gargeräts entspricht, das dasselbe Alter wie das Gargerät 10 hat.

Die Abweichung gibt dabei den Status des Gargeräts 10 an, also wie gut der Zustand des Gargeräts 10 im Vergleich anderen Gargeräten gleichen Alters ist, insbesondere in Bezug auf seine Dichtigkeit.

Eine kleine oder keine Abweichung bedeutet, dass das Gargerät 10 in einem seinem Alter entsprechenden üblichen Zustand ist.

Eine signifikante positive oder negative Abweichung deutet darauf hin, dass das Gargerät 10 in einem deutlich besseren bzw. schlechteren Zustand ist, als aufgrund seines Alters zu erwarten wäre.

Zusätzlich oder alternativ kann das ermittelte Ist-Energiebedarfsniveau mit einem Soll-Energiebedarfsniveau verglichen werden, das dem typischen Energiebedarfsniveau eine Gargeräts entspricht, das diesselbe Gesamtbetriebsdauer oder dieselbe Gesamtbetriebsdauer der Dampfheizung wie das Gargerät 10 hat.

Ferner können zusätzlich oder alternativ der Verlauf mehrerer Ist-Energiebedarfsniveaus mit einem bestimmten Verlauf mehrerer Soll-Energiebedarfsniveaus verglichen werden, um eine Abweichung zu bestimmen.

Des Weiteren kann das ermittelte Ist-Energiebedarfsniveau mit einem Soll-Energiebedarfsniveau verglichen werden, das dem ursprünglichen Energiebedarfsniveau des Gargeräts 10 entspricht, um eine Abweichung vom Neuzustand des Gargeräts 10 zu bestimmen.

Die Soll-Energiebedarfsniveaus bzw. deren Verläufe können im Steuergerät 22 oder in einer externen Datenbank hinterlegt sein, auf die das Steuergerät 22 zugreifen kann, beispielsweise über das Internet.

Auf diese Weise ist ein Verfahren sowie ein Gargerät 10, das dazu eingerichtet ist, ein solches Verfahren durchzuführen, bereitgestellt, mittels denen wirkungsvoll und mit geringem Aufwand der Status des Gargeräts 10 bestimmt werden kann.

## Patentansprüche

1. Verfahren zur Bestimmung des Status, insbesondere der Dichtigkeit, eines Gargeräts (10) mit einer Dampfheizung (17), mit den Schritten:
a) Bestimmen eines Ist-Energiebedarfsniveaus der Dampfheizung (17), bei dem der Energiebedarf der Dampfheizung (17) während des Betriebs konstant ist,
b) Ermitteln einer Abweichung des Ist-Energiebedarfsniveaus von einem Soll-Energiebedarfsniveau und/oder einer Abweichung des Verlaufs mehrerer Ist-Energiebedarfsniveaus von einem bestimmten Verlauf mehrerer Soll-Energiebedarfsniveaus, und
c) anhand der ermittelten Abweichung die Verluste des Gargeräts und somit dessen Status, insbesondere dessen Dichtigkeit bestimmt werden.

2. Verfahren nach Anspruch 1, **dadurch gekennzeichnet, dass** das Ist-Energiebedarfsniveau ausschließlich anhand des Verlaufs des Energiebedarfs der Dampfheizung (17) während des Betriebs bestimmt wird.

3. Verfahren nach einem der vorhergehenden Ansprüche, **dadurch gekennzeichnet, dass** das Bestimmen des Ist-Energiebedarfsniveaus während eines Garbetriebs durchgeführt wird.

4. Verfahren nach einem der vorhergehenden Ansprüche, **dadurch gekennzeichnet, dass** das Ist-Energiebedarfsniveau anhand mehrerer Intervalle während des Betriebs bestimmt wird.

5. Verfahren nach einem der vorhergehenden Ansprüche, **dadurch gekennzeichnet, dass** das Soll-Energiebedarfsniveau und/oder der bestimmte Verlauf mehrerer Soll-Energiebedarfsniveaus vom Alter des Gargeräts (10), von der Gesamtbetriebsdauer des Gargeräts (10) und/oder von der Gesamtbetriebsdauer der Dampfheizung (17) abhängt.

6. Verfahren nach einem der Ansprüche 1 bis 4, **dadurch gekennzeichnet, dass** das Soll-Energiebedarfsniveau einem ursprünglichen Energiebedarfsniveau entspricht, der dem Neuzustand des Gargeräts (10) zugeordnet ist.

7. Gargerät (10) mit einer Dampfheizung (17) und einem Steuergerät (22), das dazu eingerichtet ist, ein Verfahren nach einem der vorhergehenden Ansprüche durchzuführen.

## Claims

1. A method of determining the status, in particular the tightness, of a cooking appliance (10) having a steam heating system (17), comprising the steps of:
a) determining an actual energy demand level of the steam heating system (17) at which the energy demand of the steam heating system (17) is constant during operation,
b) determining a deviation of the actual energy demand level from a desired energy demand level and/or a deviation of the course of a plurality of actual energy demand levels from a specific course of a plurality of desired energy demand levels, and
c) determining, on the basis of the deviation determined, the losses of the cooking appliance and thus the status thereof, in particular the tightness thereof.

2. The method according to claim 1, **characterized in that** the actual energy demand level is determined exclusively on the basis of the course of the energy demand of the steam heating system (17) during operation.

3. The method according to any of the preceding claims, **characterized in that** the determination of the actual energy demand level is carried out during a cooking operation.

4. The method according to any of the preceding claims, **characterized in that** the actual energy demand level is determined on the basis of a plurality of intervals during operation.

5. The method according to any of the preceding claims, **characterized in that** the desired energy demand level and/or the specific course of a plurality of desired energy demand levels depend(s) on the age of the cooking appliance (10), on the total operating time of the cooking appliance (10) and/or on the total operating time of the steam heating system (17).

6. The method according to any of claims 1 to 4, **characterized in that** the desired energy demand level corresponds to an initial energy demand level assigned to the new state of the cooking appliance (10).

7. A cooking appliance (10) having a steam heating system (17) and a control unit (22), which is set up to carry out a method according to any of the preceding claims.

## Revendications

1. Procédé de détermination de l'état, en particulier de l'étanchéité, d'un appareil de cuisson (10) qui présente un chauffage à vapeur (17), comprenant les étapes suivantes :
a) la détermination d'un niveau de besoin en énergie réel du chauffage à vapeur (17), auquel le besoin en énergie du chauffage à vapeur (17) est constant pendant le fonctionnement,
b) la détermination d'un écart entre le niveau de besoin en énergie réel et un niveau de besoin en énergie de consigne et/ou d'un écart entre l'évolution de plusieurs niveaux de besoin en énergie réels et une évolution spécifique de plusieurs niveaux de besoin en énergie de consigne, et
c) les pertes de l'appareil de cuisson et donc l'état, en particulier l'étanchéité de celui-ci, sont déterminés sur la base de l'écart déterminé.

2. Procédé selon la revendication 1, **caractérisé en ce que** le niveau de besoin en énergie réel est déterminé exclusivement à partir de l'évolution du besoin en énergie du chauffage à vapeur (17) pendant le fonctionnement.

3. Procédé selon l'une des revendications précédentes, **caractérisé en ce que** la détermination du niveau de besoin en énergie réel est effectuée pendant une opération de cuisson.

4. Procédé selon l'une des revendications précédentes, **caractérisé en ce que** le niveau de besoin en énergie réel est déterminé sur la base de plusieurs intervalles pendant le fonctionnement.

5. Procédé selon l'une des revendications précédentes, **caractérisé en ce que** le niveau de besoin en énergie de consigne et/ou l'évolution déterminée de plusieurs niveaux de besoin en énergie de consigne dépendent de l'âge de l'appareil de cuisson (10), de la durée de fonctionnement totale de l'appareil de cuisson (10) et/ou de la durée de fonctionnement totale du chauffage à vapeur (17).

6. Procédé selon l'une des revendications 1 à 4, **caractérisé en ce que** le niveau de besoin en énergie de consigne correspond à un niveau de besoin en énergie initial qui est attribué à l'état neuf de l'appareil de cuisson (10).

7. Appareil de cuisson (10) présentant un chauffage à vapeur (17) et un appareil de commande (22) qui est aménagé de manière à exécuter un procédé selon l'une des revendications précédentes.
